# EUROPÄISCHE PATENTSCHRIFT

(11) **EP 2 804 783 B1**
(45) Veröffentlichungstag und Bekanntmachung des Hinweises auf die Patenterteilung: **17.07.2019**
(21) Anmeldenummer: 13702368.5
(22) Anmeldetag: 18.01.2013
(51) Int. Cl.: B60N 2/847, B60N 2/841

(54) **NEIGUNGSVERSTELLBARE KOPFSTÜTZE**
ARTICULATING HEAD RESTRAINT
APPUIE-TÊTE D'INCLINAISON RÉGLABLE

(30) Priorität: 19.01.2012 DE 102012000903; 02.04.2012 DE 102012006549; 28.06.2012 DE 102012012866
(43) Veröffentlichungstag der Anmeldung: 26.11.2014
(73) Patentinhaber: Adient Luxembourg Holding S.à r.l., 1855 Luxembourg (LU)
(72) Erfinder: DILLINGER, Thomas, 40880 Ratingen (DE); JAKUBEC, Thomas, 50126 Bergheim (DE)
(74) Vertreter: Wolff, Felix
(86) Internationale Anmeldenummer: PCT/EP2013/050953
(87) Internationale Veröffentlichungsnummer: WO 2013/107868

(56) Entgegenhaltungen:
- EP-A1- 0 970 846
- DE-A1- 19 711 006
- DE-B3-102009 036 896

## Beschreibung

Die vorliegende Erfindung betrifft eine Kopfstütze, bei der eine Tragstruktur relativ zu einem Haltemittel, insbesondere einer Haltestange, in ihrem Neigungswinkel verstellbar ist.

Derartige Kopfstützen sind aus dem Stand der Technik hinlänglich bekannt, weisen jedoch vergleichsweise viele Bauteile auf und sind dadurch schwer bzw. aufwändig zu montieren und/oder haben den Nachteil, dass die Kraft, die benötigt wird, um ein Verriegelungsmittel zu lösen, das die Kopfstütze in ihrer jeweiligen Stellung fixiert, je nach Stellung der Kopfstütze vergleichsweise hoch ist.

In der DE 10 2009 036 896 B3 wird eine Kopfstütze mit einer Tragstruktur beschrieben, wobei die Kopfstütze relativ zu zwei als Einzeltragstangen ausgebildeten Haltemitteln in ihrem Neigungswinkel verstellbar ist. Ferner offenbart die EP 0 970 846 A1 eine Kopfstütze, die relativ zu zwei Haltestangen in ihrem Neigungswinkel verstellbar ist. Beim Verstellen der aus dem Stand der Technik bekannten Kopfstützen kann es zu einer unerwünschten Differenz der eingestellten Neigungswinkel an der rechten und der linken Seite der Kopfstütze kommen.

Es war deshalb die Aufgabe der vorliegenden Erfindung, eine Kopfstütze zur Verfügung zu stellen, die die Nachteile des Standes der Technik nicht aufweist.

Gelöst wird die Aufgabe mit einer Kopfstütze mit den Merkmalen des Patentanspruchs 1.

Die vorliegende Erfindung betrifft eine Kopfstütze mit einem Haltemittel und einer Tragstruktur. Diese Tragstruktur ist vorzugsweise mit einer Polsterung und besonders bevorzugt mit einem Bezug versehen.

Diese Tragstruktur kann relativ zu dem Haltemittel, beispielsweise einer oder mehreren Haltestangen, in ihrem Neigungswinkel verstellt und in der jeweils gewünschten Position fixiert werden. Dafür weist die erfindungsgemäße Kopfstütze ein Verriegelungsmittel auf, das besonders bevorzugt drehbar an dem Haltemittel angeordnet ist und das lösbar mit dem Formschlussmittel zusammenwirkt, um die Tragstruktur in ihrer jeweiligen Winkelstellung zu fixieren. Erfindungsgemäß ist dieses Formschlussmittel nun einstückig mit der Tragstruktur vorgesehen. Beispielsweise wird die Tragstruktur mit dem Formschlussmittel als ein Guss- oder Spritzgussteil, vorzugsweise aus Kunststoff, hergestellt. Vorzugsweise weist die Tragstruktur zwei Formschlussmittel, insbesondere Zahnstangen, auf, die jeweils verriegelnd mit dem Verriegelungsmittel zusammenwirken. Vorzugsweise sind die Zähne der Zahnstange so geformt, dass die Tragstruktur in einer Richtung, insbesondere zum Kopf eines Sitzinsassen hin, in ihrer Neigung verstellt werden kann, ohne dass das Entriegelungsmittel entriegelt wird. In die entgegengesetzte Richtung ist jedoch eine Neigungsverstellung nur möglich, wenn der Verriegelungsmechanismus entriegelt ist.

Erfindungsgemäß ist das Haltemittel U-förmig vorgesehen, wobei die Basis des U als Drehachse für die Tragstruktur dient. Die Schenkel des U werden erfindungsgemäß jeweils an der Rückenlehne, insbesondere längsverschieblich, befestigt. Durch die Längsverschiebung kann die Höhe der Kopfstütze an die Bedürfnisse des Sitzinsassen angepasst werden.

Vorzugsweise ist das Verriegelungsmittel drehbar an dem Haltemittel angeordnet, wobei die Drehachse vorzugweise an dem Verriegelungsmittel, insbesondere einstückig, vorgesehen ist. Dadurch wird die Anzahl der benötigten Teile reduziert. Durch eine Drehung um die Drehachse wird das Verriegelungsmittel von seiner verriegelnden in seine entriegelnde Stellung und umgekehrt überführt. Das Verriegelungsmittel kann aber auch elastisch gebogen werden, um es von seiner verriegelnden in seine entriegelnde Stellung zu bringen.

Vorzugsweise weist die erfindungsgemäße Kopfstütze mindestens ein Federmittel auf, das das Verriegelungsmittel in Richtung des an der Tragstruktur vorgesehenen Formschlussmittels vorspannt.

Vorzugsweise wird das Entriegelungsmittel durch ein Federmittel betätigt, das beim Entriegeln des Verriegelungsmittels die Tragstruktur automatisch in ihre Ausgangsposition, von dem Kopf des Sitzinsassen weg, zurückzieht.

Ein bevorzugter Gegenstand der vorliegenden Erfindung ist eine erfindungsgemäße Kopfstütze, bei der ein Verriegelungsmittel, das die Tragstruktur der Kopfstützte in einer bestimmten Stellung relativ zu einem Haltemittel fixiert, mit einem Federmittel verbunden ist, wobei das Federmittel mit einer Zwangsführung versehen ist.

Vorzugsweise ist vorgesehen, dass das Verriegelungsmittel mit einem Federmittel verbunden ist, beispielsweise um es in Richtung des Formschlussmittels vorzuspannen, wobei das Federmittel zwangsgeführt ist. Dadurch längt und kürzt sich das Federmittel entlang eines definierten Weges. Des Weiteren kann die Richtung des Vektors der Federkraft, die auf das Verriegelungsmittel einwirkt, eindeutig festgelegt werden. Vorzugsweise ist die Zwangsführung im Wesentlichen L-förmig vorgesehen. Vorzugsweise handelt es sich bei dem Federmittel um eine Spiralfeder, deren eines Ende an der Tragstruktur und deren anderes Ende an dem Verriegelungsmittel befestigt ist.

Vorzugsweise weist die Kopfstütze ein Federmittel auf, das beim oder nach dem Entriegeln des Verriegelungsmittels die Tragstruktur automatisch in ihre Ausgangsposition, von dem Kopf des Sitzinsassen weg, zurückzieht.

Im Folgenden wird die Erfindung anhand der Figuren 1 - 6 erläutert. Diese Erläuterungen sind lediglich beispielhaft und schränken den allgemeinen Erfindungsgedanken nicht ein.
- Figur 1: zeigt die Einzelteile der erfindungsgemäßen Kopfstütze.
- Figur 2: zeigt einen Schnitt durch die erfindungsgemäße Kopfstütze.
- Figur 3: zeigt das Verriegelungsmittel der erfindungsgemäßen Kopfstütze.
- Figur 4: zeigt eine spezielle Ausführungsform eines Federmittels.
- Figur 5: zeigt die Einzelteile der erfindungsgemäßen Kopfstütze.
- Figur 6: zeigt die Zwangsführung des Federmittels.

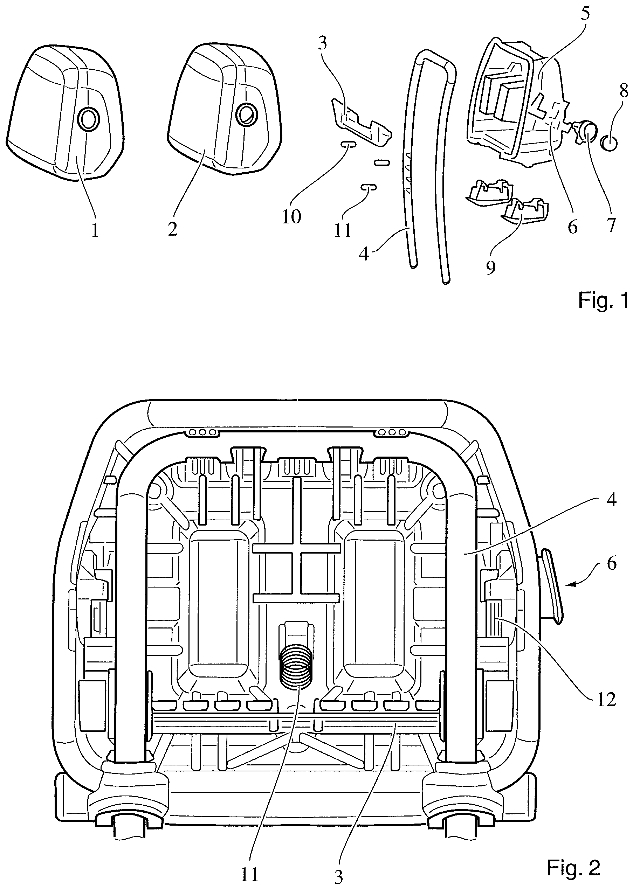

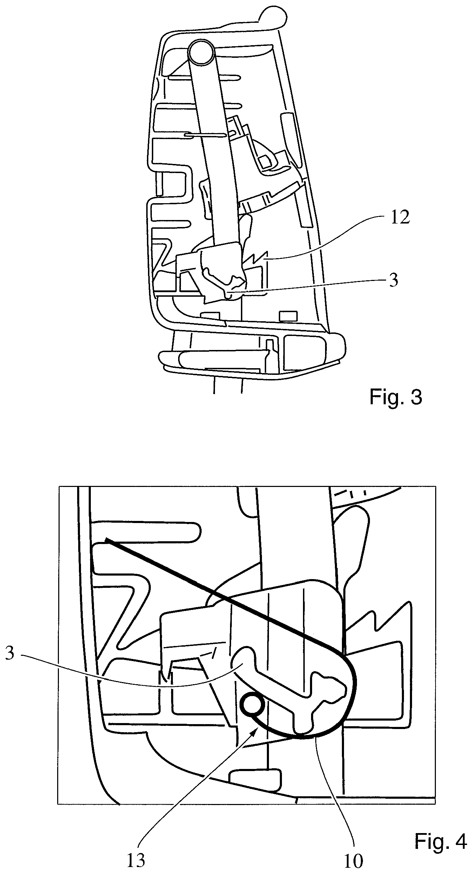

Figuren 1 - 3 zeigen die erfindungsgemäße Kopfstütze. Diese weist eine Tragstruktur 5 auf, die drehbar an einem Haltemittel 4, hier U-förmig vorgesehene Haltestangen, d. h. in ihrem Neigungswinkel verstellbar, gelagert ist. Dabei dreht sich die Tragstruktur 5 um die Basis des U-förmig vorgesehenen Haltemittels. Die beiden Schenkel des U werden, vorzugsweise längsverschieblich, in der Rückenlehne eines Fahrzeugsitzes oder in der Karosserie eines Kraftfahrzeuges gelagert. Vorzugsweise ist die erfindungsgemäße Kopfstütze mit einem Polster 2, beispielsweise Schaum, und/oder einem Bezug 1 versehen. Um die Tragstruktur 5 in ihrer jeweiligen Winkelstellung fixieren zu können, weist die erfindungsgemäße Kopfstütze ein Verriegelungsmittel 3 auf, das mit einem Formschlussmittel 12, hier einer Zahnstange (vgl. Fig. 3 und 4), form- und/oder kraftschlüssig zusammenwirkt, um die Tragstruktur 5 in ihrer jeweiligen Winkelstellung zu fixieren. In dem vorliegenden Fall sind zwei Zahnstangen 12 vorgesehen, die jeweils rechts und links von dem Haltemittel 4 angeordnet sind und jeweils mit dem Verriegelungsmittel 3 zusammenwirken. Erfindungsgemäß ist jedes Formschlussmittel 12 einstückig mit der Tragstruktur 5 verbunden. Um zu verhindern, dass sich die Tragstruktur 5 selbsttätig verstellt und/oder um Geräuschbildung zu vermeiden, weist die erfindungsgemäße Kopfstütze vorzugsweise mindestens ein, hier zwei, Federmittel 10 auf, die das Verriegelungsmittel 3 in Richtung des Formschlussmittels 12 vorspannen.

Das Verriegelungsmittel 3 ist drehbar an dem Haltemittel 4 gelagert und wird von seiner verriegelnden in eine entriegelnde Stellung, in dem vorliegenden Fall gegen den Uhrzeigersinn, gedreht. Die Betätigung des Verriegelungsmittels erfolgt in dem vorliegenden Fall durch ein Federmittel 11, dessen eines Ende mit dem Verriegelungsmittel 3 und dessen anderes Ende mit der Tragstruktur 5 verbunden ist. Dadurch wird die Tragstruktur automatisch in ihre Ausgangsposition verbracht, sobald das Verriegelungsmittel nicht mehr verriegelnd mit der Zahnstange zusammenwirkt. Aus dieser Ausgangsposition kann die Tragstruktur dann wieder schrittweise in Richtung des Kopfes des Sitzinsassen geneigt werden. Das Verriegelungsmittel wird durch ein Entriegelungsmittel 6, in dem vorliegenden Fall ein Druckknopf 8, der in einer Druckknopfeinhausung 7 vorgesehen ist, betätigt. Der Fachmann versteht, dass auch andere Entriegelungsmittel vorgesehen sein können. Im Bereich der Haltemittel 4 sind, insbesondere aus optischen Gründen, vorzugsweise Abdeckmittel 9 vorgesehen, die jedoch auch eine Verletzung des Sitzinsassen an der erfindungsgemäßen Kopfstütze verhindern.

Figur 4 zeigt eine spezielle Ausführungsform des Federmittels, das die Verriegelungsvorrichtung gegen das Formschlussmittel, hier die Zahnstange, vorspannt. In dem vorliegenden Fall weist dieses Federmittel einen elastischen Bereich 13 auf, der das Verriegelungsmittel 3 in Richtung der Zahnstange 12 drückt. Vorzugweise sind zwei elastische Bereiche 13 vorgesehen.

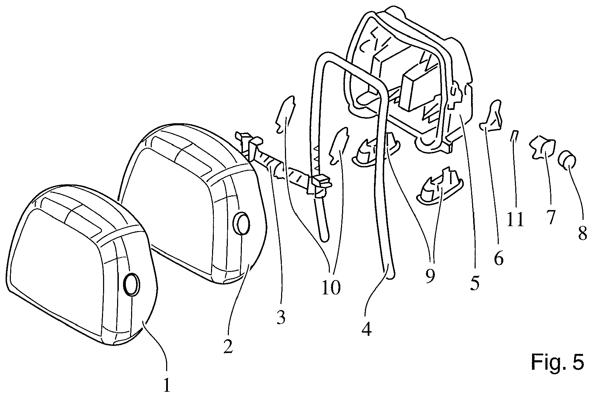

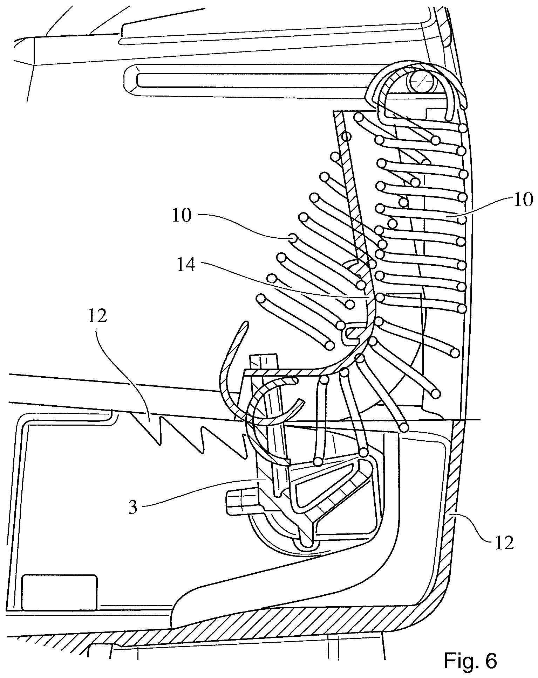

Figuren 5 und 6 zeigen eine weitere Ausführungsform der erfindungsgemäßen Kopfstütze. Diese weist eine Tragstruktur 5 auf, die drehbar an einem Haltemittel 4, hier U-förmig vorgesehene Haltestangen, d. h. in ihrem Neigungswinkel verstellbar, gelagert ist. Dabei dreht sich die Tragstruktur 5 um die Basis des U-förmig vorgesehenen Haltemittels. Die beiden Schenkel des U werden, vorzugsweise längsverschieblich, in der Rückenlehne eines Fahrzeugsitzes oder in der Karosserie eines Kraftfahrzeuges gelagert. Vorzugsweise ist die erfindungsgemäße Kopfstütze mit einem Polster 2, beispielsweise Schaum, und/oder einem Bezug 1 versehen. Um die Tragstruktur 5 in ihrer jeweiligen Winkelstellung fixieren zu können, weist die erfindungsgemäße Kopfstütze ein Verriegelungsmittel 3 auf, das mit einem Formschlussmittel 12, hier einer Zahnstange (vgl. Fig. 6), form- und/oder kraftschlüssig zusammenwirkt, um die Tragstruktur 5 in ihrer jeweiligen Winkelstellung zu fixieren. In dem vorliegenden Fall sind zwei Zahnstangen 12 vorgesehen, die jeweils rechts und links von dem Haltemittel 4 angeordnet sind und jeweils mit dem Verriegelungsmittel 3 zusammenwirken. Vorzugsweise ist jedes Formschlussmittel 12 einstückig mit der Tragstruktur 5 verbunden. Um zu verhindern, dass sich die Tragstruktur 5 selbsttätig verstellt und/oder um Geräuschbildung zu vermeiden, weist die erfindungsgemäße Kopfstütze vorzugsweise mindestens ein, hier zwei Federmittel 10 auf, die das Verriegelungsmittel 3 in Richtung des Formschlussmittels 12 vorspannen. Das Verriegelungsmittel 3 ist drehbar an dem Haltemittel 4 gelagert und wird von seiner verriegelnden in eine entriegelnde Stellung, in dem vorliegenden Fall gegen den Uhrzeigersinn, gedreht. Die Kopfstütze weist vorzugsweise ein weiteres Federmittel 11 auf, das die Tragstruktur automatisch in ihre Ausgangsposition verbringt, sobald das Verriegelungsmittel nicht mehr verriegelnd mit der Zahnstange zusammenwirkt. Aus dieser Ausgangsposition kann die Tragstruktur dann wieder schrittweise in Richtung des Kopfes des Sitzinsassen geneigt werden. Das Verriegelungsmittel wird durch ein Entriegelungsmittel 6, in dem vorliegenden Fall ein Druckknopf 8, der in einer Druckknopfeinhausung 7 vorgesehen ist, betätigt. Der Fachmann versteht, dass auch andere Entriegelungsmittel vorgesehen sein können. Im Bereich der Haltemittel 4 sind, insbesondere aus optischen Gründen, vorzugsweise Abdeckmittel 9 vorgesehen, die jedoch auch eine Verletzung des Sitzinsassen an der erfindungsgemäßen Kopfstütze verhindern.

Figur 6 zeigt zwei mögliche Ausgestaltungsformen der Feder 10, wobei nur die rechte Ausgestaltungsform erfindungsgemäß ist. Das Federmittel 10, hier eine Spiralfeder, ist in der rechten Ausgestaltungsform in einer Zwangsführung 14 vorgesehen. Dadurch spannt und entspannt sich das Federmittel entlang eines vorgegebenen Weges und das Federmittel kann im Vergleich zu der linken Ausführungsform länger ausgebildet werden, wodurch sich die Kraft, die benötigt wird, um die Kopfstütze zu entriegeln, mit deren Verstellweg nur unwesentlich erhöht. Außerdem kann der Winkel, mit dem die Federkraft an dem Verriegelungsmittel angreift, eingestellt werden und dieser verändert sich durch die Verstellung der Tragstruktur der Kopfstütze nicht.

### Bezugszeichenliste:

- 1: Bezug
- 2: Polster, Schaum
- 3: Verriegelungsmittel
- 4: Haltemittel, Haltestange
- 5: Tragstruktur
- 6: Entriegelungsmittel
- 7: Druckknopfeinhausung
- 8: Druckknopf
- 9: Abdeckmittel
- 10: Federmittel
- 11: Federmittel
- 12: Formschlussmittel, Zahnstange
- 13: elastischer Bereich
- 14: Zwangsführung

## Patentansprüche

1. Kopfstütze mit einem Haltemittel (4) und einer Tragstruktur (5), die relativ zu dem Haltemittel (4) in ihrem Neigungswinkel verstellbar ist, und mit einem Formschlussmittel (12), das form- und/oder kraftschlüssig mit einem Verriegelungsmittel (3) zusammenwirkt und dadurch die Tragstruktur (5) in ihrer jeweils gewünschten Winkelposition fixiert, wobei das Formschlussmittel (12) einstückig mit der Tragstruktur (5) vorgesehen ist, **dadurch gekennzeichnet, dass** das Haltemittel U-förmig vorgesehen ist, wobei die Basis des U als Drehachse für die Tragstruktur (5) dient und die Schenkel des U jeweils an einer Rückenlehne, insbesondere längsverschieblich, befestigt werden.

2. Kopfstütze nach Anspruch 1, bei der ein Verriegelungsmittel (3), das die Tragstruktur (5) der Kopfstützte in einer bestimmten Stellung relativ zu einem Haltemittel (4) fixiert, mit einem Federmittel (10) verbunden ist, **dadurch gekennzeichnet, dass** das Federmittel (10) mit einer Zwangsführung (14) versehen ist.

3. Kopfstütze nach Anspruch 2, **dadurch gekennzeichnet, dass** die Zwangsführung (14) im Wesentlichen L-förmig vorgesehen ist.

4. Kopfstütze nach Anspruch 1 oder 2, **dadurch gekennzeichnet, dass** das Verriegelungsmittel (3) drehbar an dem Haltemittel (4) angeordnet ist und lösbar mit dem Formschlussmittel zusammenwirkt.

5. Kopfstütze nach Anspruch 2, **dadurch gekennzeichnet, dass** die Drehachse des Verriegelungsmittels mit diesem einstückig vorgesehen ist.

6. Kopfstütze nach einem der voranstehenden Ansprüche, **dadurch gekennzeichnet, dass** die Tragstruktur (5) mit dem Formschlussmittel (12) als ein Guss- oder Spritzgussteil, vorzugsweise aus Kunststoff, hergestellt ist.

7. Kopfstütze nach einem der voranstehenden Ansprüche, **dadurch gekennzeichnet, dass** sie ein weiteres Federmittel (10, 11) aufweist, das beim Entriegeln des Verriegelungsmittels die Tragstruktur (5) automatisch in ihre Ausgangsposition, von dem Kopf des Sitzinsassen weg, zurückzieht.

## Claims

1. Head restraint having a holding means (4) and a support structure (5) which is able to be adjusted in the angle of inclination thereof relative to the holding means (4) and having a positive connection means (12) which cooperates positively and/or non-positively with a locking means (3) and, as a result, fixes the support structure (5) in the respectively desired angular position thereof, wherein the positive connection means (12) is provided integrally with the support structure (5), **characterized in that** the holding means is provided in a U-shape, wherein the base of the U-shape serves as a rotational axis for the support structure (5) and the arms of the U-shape are each fastened to a backrest, in particular in a longitudinally displaceable manner.

2. Head restraint according to Claim 1, in which a locking means (3) which fixes the support structure (5) of the head restraint in a specific position relative to a holding means (4) is connected to a spring means (10), **characterized in that** the spring means (10) is provided with a restricted guidance means (14).

3. Head restraint according to Claim 2, **characterized in that** the restricted guidance means (14) is provided to be substantially L-shaped.

4. Head restraint according to Claim 1 or 2, **characterized in that** the locking means (3) is rotatably arranged on the holding means (4) and releasably cooperates with the positive connection means.

5. Head restraint according to Claim 2, **characterized in that** the rotational axis of the locking means is integrally provided thereon.

6. Head restraint according to one of the preceding claims, **characterized in that** the support structure (5) is provided with the positive connection means (12) as a cast part or injection-molded part, preferably of plastics material.

7. Head restraint according to one of the preceding claims, **characterized in that** it comprises a further spring means (10, 11) which, when the locking means is unlocked, automatically pulls back the support structure (5) into its initial position away from the head of the seat occupant.

## Revendications

1. Appui-tête comprenant un moyen de retenue (4) et une structure porteuse (5) dont l'angle d'inclinaison peut être réglé par rapport au moyen de retenue (4), et comprenant un moyen d'engagement par correspondance de formes (12) qui coopère par engagement par correspondance de formes et/ou par force avec un moyen de verrouillage (3) et fixe de ce fait la structure porteuse (5) dans sa position angulaire souhaitée respective, le moyen d'engagement par correspondance de formes (12) étant prévu d'une seule pièce avec la structure porteuse (5), **caractérisé en ce que** le moyen de retenue est en forme de U, la base du U servant d'axe de pivotement pour la structure porteuse (5) et les branches du U étant à chaque fois fixées à un dossier, en particulier de manière déplaçable longitudinalement.

2. Appui-tête selon la revendication 1, dans lequel un moyen de verrouillage (3) qui fixe la structure porteuse (5) de l'appui-tête dans une position déterminée par rapport à un moyen de retenue (4) est raccordé à un moyen de ressort (10), **caractérisé en ce que** le moyen de ressort (10) est pourvu d'un guidage forcé (14).

3. Appui-tête selon la revendication 2, **caractérisé en ce que** le guidage forcé (14) est essentiellement en forme de L.

4. Appui-tête selon la revendication 1 ou 2, **caractérisé en ce que** le moyen de verrouillage (3) est disposé de manière pivotante sur le moyen de retenue (4) et coopère de manière détachable avec le moyen d'engagement par correspondance de formes.

5. Appui-tête selon la revendication 2, **caractérisé en ce que** l'axe de pivotement du moyen de verrouillage est réalisé d'une seule pièce avec celui-ci.

6. Appui-tête selon l'une quelconque des revendications précédentes, **caractérisé en ce que** la structure porteuse (5) avec le moyen d'engagement par correspondance de formes (12) est réalisée sous forme de pièce moulée ou sous forme de pièce moulée par injection, de préférence en plastique.

7. Appui-tête selon l'une quelconque des revendications précédentes, **caractérisé en ce qu'**il présente un moyen de ressort supplémentaire (10, 11) qui, lors du déverrouillage du moyen de verrouillage, ramène la structure porteuse (5) automatiquement dans sa position initiale à l'écart de la tête de l'occupant du siège.
